# EUROPÄISCHE PATENTSCHRIFT

(11) **EP 3 433 494 B1**
(45) Veröffentlichungstag und Bekanntmachung des Hinweises auf die Patenterteilung: **15.09.2021**
(21) Anmeldenummer: 17710953.5
(22) Anmeldetag: 16.03.2017
(51) Int. Cl.: F04D 1/00, F04D 29/02, F04D 29/12, F16J 15/34, F04D 7/06

(54) **KREISSELPUMPE MIT EINER GLEITRINGDICHTUNG**
CENTRIFUGAL PUMP WITH FACE SEAL
POMPE AVEC JOINT D'ÉTANCHÉITÉ À FACE

(30) Priorität: 22.03.2016 DE 102016204722; 10.03.2017 DE 102017204004
(43) Veröffentlichungstag der Anmeldung: 30.01.2019
(73) Patentinhaber: KSB SE & Co. KGaA, 67227 Frankenthal (DE)
(72) Erfinder: NIEDERMEIER, Peter, 67227 Frankenthal (DE)
(86) Internationale Anmeldenummer: PCT/EP2017/056249
(87) Internationale Veröffentlichungsnummer: WO 2017/162515

(56) Entgegenhaltungen:
- DE-A1- 3 909 100
- US-A- 2 761 711

## Beschreibung

Die Erfindung betrifft eine Kreiselpumpe zur Förderung heißer Medien mit einer Gleitringdichtung.

Eine Gleitringdichtung bei einer Kreiselpumpe dient zur Abdichtung einer durch das Gehäuse laufenden Welle. Gleitringdichtungen sind bei Kreiselpumpen in verschiedenen Ausführungen vorzusehen, wobei immer der Arbeitsbereich der Kreiselpumpe zu berücksichtigen ist. Hier sind im Zusammenhang mit der vorliegenden Erfindung insbesondere Druck- und Temperaturbereich des geförderten Mediums zu berücksichtigen.

Beim Einsatz einer Pumpe in einem breiten Temperaturbereich kommt es zur Ausdehnung der einzelnen Bauteile, die sich je nach Material unterschiedlich dehnen. Dies kann an entscheidenden Stellen zu Spannungen und damit verbunden zu ungünstigen geometrischen Konfigurationen führen.

Die EP 1 079 157 B1 begegnet diesem Effekt mit einem verformbaren Element, das in der Gleitringdichtung vorgesehen ist und die Verkippung des ruhenden Bauteils gegenüber dem beweglichen Bauteil infolge unterschiedlicher Wärmeausdehnung der einzelnen Komponenten kompensiert. Hierfür ist jedoch die Auswahl eines speziellen Werkstoffes erforderlich, der nicht immer für jede Anwendung geeignet ist.

Die US2761711A zeigt eine Wellenabdichtung mit einem keramischen Dichtmittel, das durch ein Spannmittel unterstützt wird.

Die DE3909100A zeigt eine Wellenabdichtung mit einem Dichtmittel und einem Spannmittel, das Wärmeausdehnungen kompensieren soll.

Der vorliegenden Erfindung liegt die Aufgabe zugrunde, für eine Kreiselpumpe, die in einem breiten Temperaturbereich zum Einsatz kommt, eine Gleitringdichtung zu schaffen, die einen ortsfesten Gleitring, insbesondere einen keramischen Gleitring, und einen rotierenden Gegenring, insbesondere einen keramischen Gegenring, umfasst, wobei die Gleitringdichtung über den kompletten Temperaturbereich eine auseichende Dichtwirkung entfalten soll.

Gleitringdichtungen bei denen sowohl der Gleitring als auch der Gegenring aus einem keramischen Material, beispielsweise SiC gefertigt sind, weisen eine besonders lange Standzeit auf. Bei konstanter Belastung können Dichtungen dieses Typs mehrere 10000 Stunden problemlos in Kreiselpumpen eingesetzt werden. Problematisch ist jedoch der Wechsel der Temperatur in der jeweiligen Anwendung. Hier können beim Hochfahren einer Anlage durch große Temperaturunterschiede erhebliche Spannungen auftreten, die einerseits eine Belastung für das Material darstellen, da keramische Werkstoffe wie SiC besonders spröde sind und nur geringe Zugspannungen zulassen. Andererseits kann die unterschiedliche Ausdehnung verschiedener Komponenten der Gleitringdichtung zu einem Verkippen des Gleitrings gegenüber dem Gegenring führen, wodurch die Dichtung ihre Wirkung verliert.

Die Lösung dieser Aufgabe bei der Gleitringdichtung wird erreicht, indem der Aufbau der Gleit- und/oder Gegenringkomponenten bestehend aus einer metallischen Halterung und einem Dichtelement, insbesondere einem keramischen Dichtelement, ein metallisches Spannmittel, insbesondere ein metallisches Ringelement, beigefügt wird, wobei an dem metallischen Spannmittel ein radiales Haltemittel vorgesehen ist, wobei das radiale Haltemittel ein gegen axiales verrutschen sicherndes ist.

Dieses Spannmittel bzw. Ringelement dient der Kompensation der Kräfte, die infolge der räumlichen Ausdehnung durch den Einfluss der Wärme auf die metallische Halterung und das keramischen Dichtelement entstehen. Dies sorgt einerseits dafür, dass die Dichtfläche zwischen den beiden keramischen Ringen des Gleit- und Gegenrings gegenüber dem Herstellungszustand unverändert (z.B. parallel) und damit auslegungsgemäß dichtend bleibt und andererseits hohe Spannungen in den keramischen Ringen vermieden werden, was die Anfälligkeit für mechanische Störungen deutlich verringert.

Gemäß der Erfindung ist der Ring mit einem partiellen Vorsprung, beispielsweise einer Nase versehen, die ein axiales Verschieben verhindert. Wird der Ring ausreichend erwärmt, so dass er sich so weit ausdehnt, dass die Verbindung zum darunter liegenden Bereich gelöst wird, so verhindert eine entsprechende Nase das herabfallen des Rings.

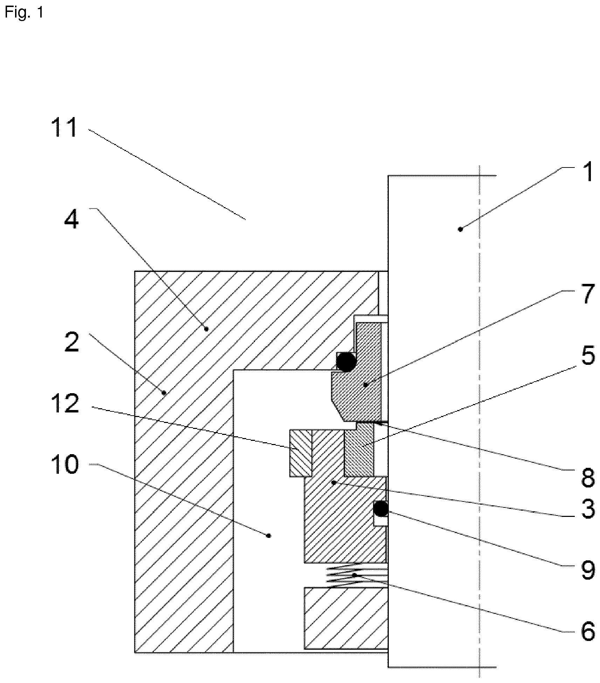

Die Fig. 1 zeigt eine nicht erfindungsgemäße Kreiselpumpe, beziehungsweise den Bereich, in dem die Welle 1 durch das Gehäuse 2 hindurchläuft. Dieser Durchgang ist mittels einer Gleitringdichtung abgedichtet. Die Gleitringdichtung besteht aus einem ersten Teil 3 und einem zweiten Teil 4. Das erste Teil 3 ist dabei ein fest mit der Welle 1 der Kreiselpumpe verbundenes Metallteil, das das eigentliche Dichtelement nämlich das keramische Dichtmittel 5 aufnimmt. Das erste Teil 3 ist auf der Welle 1 axial verschiebbar, wobei eine Dichtung 9 das erste Teil 3 gegen die Welle 1 abdichtet. Eine Feder 6 sorgt dafür, dass das keramische Dichtmittel 5 mit gleich bleibender Kraft gegen das keramische Dichtmittel 7 gedrückt wird. Hierdurch bleibt der Dichtspalt 8 kontinuierlich eingestellt und die Leckage von der Hochdruckseite 10 zur Niederdruckseite 11 wird minimiert. Das keramische Dichtmittel 7 ist in dem metallischen zweiten Teil 4 gelagert.

Die beiden keramischen Dichtmittel 5 und 7 werden durch den abzudichtenden Differenzdruck gegeneinander gedrückt, so dass im Dichtbereich 8 eine geringe Leckage entweichen kann.

Bei der Erwärmung der Gleitringdichtung dehnen sich die metallischen Teile und die keramischen Dichtmittel unterschiedlich stark aus. Entsprechend kommt es zu Spannungen, da die Komponenten, wie aus der Figur 1 ersichtlich koaxial angeordnet sind. Diese Spannungen führen einerseits zu Verkippungen zwischen den beiden keramischen Dichtmitteln 5 und 7, die dann eine höhere Leckage aufweisen und außerdem stärkerem Verschleiß unterliegen. Andererseits kommt es zu Kräften, die den keramischen Werkstoff direkt zerstören könnten, da dieser nur geringen Druckkräften standhalten kann.

Diese Einflüsse der unterschiedlichen Wärmeausdehnung können durch ein erfindungsgemäßes Spannmittel 12 kompensiert werden. Das Spannmittel 12 hält das keramische Dichtmittel 5 so in seiner Position, dass keine Kräfte daran wirken, die zu einer Zerstörung des Dichtmittels 5 führen können.

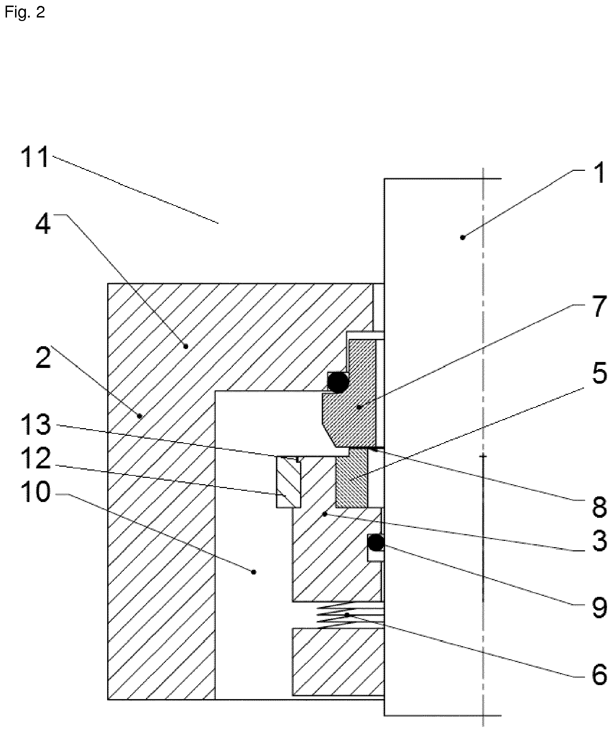

Das Spannmittel 12 kann in günstiger Weise durch aufschrumpfen an dem zweiten Teil 3 befestigt werden. Erfindungsgemäß, und wie in der Figur 2 dargestellt ist, wird durch geeignete Haltemittel 13 ver-hindert, dass das Spannmittel 12 bei sehr starker Abkühlung selbständig aus seiner Lage verschoben werden kann.

Je nach Anforderung kann das Spannmittel noch mit radialen Haltemitteln, beispielsweise einer Verzahnung versehen sein, die hier in der Figur nicht dargestellt ist.

## Patentansprüche

1. Kreiselpumpe zur Förderung heißer Fluide, mit einer im Bereich der Wellendurchführung angeordneten berührenden Wellenabdichtung, angeordnet in einem Dichtungsgehäuse (2), wobei die Wellenabdichtung ein erstes feststehendes Teil (3) umfasst, das ortsfest mit dem Dichtungsgehäuse (2) verbunden ist und wobei die Wellenabdichtung ein zweites rotierendes Teil (3) umfasst, das ortsfest mit der Welle (1) verbunden ist, wobei das erste und das zweite Teil (3, 4) den Dichtspalt 8 abgrenzen, wobei das erste und das zweite Teil (3, 4) durch den abzudichtenden Druck aneinandergedrückt werden, wobei das erste und/oder das zweite Teil (3, 4) aus mehreren ineinander angeordneten Mitteln bestehen, nämlich aus einem metallischen Haltemittel (3), einem Dichtmittel (5), und einem metallischen Spannmittel (12),
wobei das metallische Spannmittel (12) als Mittel zur Kompensation thermischer Verformung in radialer Richtung ausgeführt ist, wobei das metallische Spannmittel (12) der radialen thermischen Verformung des metallischen Haltemittels (3) und des Dichtmittels (5) kraftschlüssig entgegen wirkt, wobei das metallische Spannmittel (12) das metallische Haltemittel (3) im Bereich des Dichtmittels (5) vollständig umschließt, wobei an dem metallischen Spannmittel (12) ein radiales Haltemittel (13) vorgesehen ist, wobei das radiale Haltemittel (13) ein gegen axiales verrutschen sicherndes ist.

## Claims

1. Centrifugal pump for delivering hot fluids, having a contacting shaft seal which is arranged in the region of the shaft leadthrough and which is arranged in a seal housing (2), wherein the shaft seal comprises a first, fixed part (3) which is connected in a positionally fixed manner to the seal housing (2), and wherein the shaft seal comprises a second, rotating part (3) which is connected in a positionally fixed manner to the shaft (1), wherein the first and second parts (3, 4) delimit the sealing gap (8), wherein the first and second parts (3, 4) are pressed against one another by the pressure to be sealed off, wherein the first and/or second parts/part (3, 4) consist of multiple means arranged one inside the other, specifically a metallic holding means (3), a sealing means (5), and a metallic clamping means (12), wherein the metallic clamping means (12) is designed as a means for compensating for thermal deformation in a radial direction, wherein the metallic clamping means (12) counteracts the radial thermal deformation of the metallic holding means (3) and the sealing means (5) in a force-fitting manner, wherein the metallic clamping means (12) completely surrounds the metallic holding means (3) in the region of the sealing means (5), wherein a radial holding means (13) is provided on the metallic clamping means (12), wherein the radial holding means (13) is one which secures against axial slippage.

## Revendications

1. Pompe centrifuge permettant de débiter des fluides chauds, comprenant une garniture étanche d'arbre disposée en contact au niveau du passage d'arbre, disposée dans un logement de garniture (2), la garniture étanche d'arbre comprenant une première partie fixe (3) qui est reliée de manière stationnaire au logement de garniture (2), et la garniture étanche d'arbre comprenant une deuxième partie rotative (3) qui est reliée de manière stationnaire à l'arbre (1), la première et la deuxième partie (3, 4) délimitant la fente d'étanchéité (8), la première et la deuxième partie (3, 4) étant pressées l'une contre l'autre par la pression à contenir, la première et/ou la deuxième partie (3, 4) étant composées de plusieurs moyens disposés les uns à l'intérieur des autres, notamment d'un moyen de retenue métallique (3), d'un moyen d'étanchéité (5) et d'un moyen de serrage métallique (12), le moyen de serrage métallique (12) étant réalisé comme un moyen pour compenser une déformation thermique dans la direction radiale, le moyen de serrage métallique (12) agissant par adhérence contre la déformation thermique radiale du moyen de retenue métallique (3) et du moyen d'étanchéité (5), le moyen de serrage métallique (12) entourant complètement le moyen de retenue métallique (3) au niveau du moyen d'étanchéité (5), un moyen de retenue radial (13) étant prévu sur le moyen de serrage métallique (12), le moyen de retenue radial (13) étant un moyen empêchant un glissement axial.
